# EUROPEAN PATENT SPECIFICATION

(11) **EP 1 918 806 B1**
(45) Date of publication and mention of the grant of the patent: **29.04.2009**
(21) Application number: 07119145.6
(22) Date of filing: 24.10.2007
(51) Int. Cl.: G06F 3/046

(54) **Position-detecting apparatus and position-indicating device**
Positionserkennungsvorrichtung und Positionsanzeigevorrichtung
Appareil et dispositif de détection de la position

(30) Priority: 31.10.2006 JP 2006296511
(43) Date of publication of application: 07.05.2008
(73) Proprietor: Wacom Co., Ltd., Saitama 349-1148 (JP)
(72) Inventor: Katsurahira, Yuji, Kazo-city Saitama 347-0016 (JP)
(74) Representative: Richardt, Markus Albert

(56) References cited:
- EP-A- 0 587 201
- US-A- 5 600 105
- US-A- 5 679 930

## Description

### Cross References to Related Applications

The present invention contains subject matter related to Japanese Patent Application JP 2006-296511 filed in the Japanese Patent Office on October 31, 2006.

### Background of the Invention

### Field of the Invention

The present invention relates to both a position-detecting apparatus and a position-indicating device, which are suitable to be used in, for example, a digitizer connected to a computer and specifically configured to generate a strong reply signal depending on a transmission from a tablet during the detection of a position with an electromagnetic induction system.

### Description of the Related Art

In recent years, liquid crystal displays have been put to practical use. Demand has increased for a position-detecting apparatus configured such that the position-detecting apparatus is combined with a liquid crystal display to allow the user to input a desired drawing position directly with a pen. The use of the position-detecting apparatus with such a configuration causes a problem in that stable signal detection is difficult to attain due to the generation of noise from the liquid display device or the like. For overcoming such a problem, typically, a counter measure is taken to reduce an influence of noise by strengthening power to be transmitted from the tablet.

In prior art position-detecting apparatus, positional detection is carried out as follows. A resonance circuit built in a position-indicating device is allowed to resonate with an electromagnetic wave at a specific frequency sent from a tablet and the resonant signal is then received by the tablet (see, for example, Japanese Unexamined Patent Application Publication No. 63-70326 (JP 63-70326 A)).

In other words, in the invention disclosed in JP 63-70326 A, a resonance circuit is mounted on a position-indicating device to allow an electromagnetic signal to be sent and received between a tablet and the position-indicating device. Thus, the position-indicating device may be cordless or battery-free and capable of detecting contiguous information data about pen pressure and so on by slightly changing a resonance frequency depending on the pen pressure. Therefore, a user-friendly position-detecting apparatus is obtained.

However, the invention of JP 63-70326 A has a disadvantage in that a pen pressure may not be detected in a stable manner, because of a change in resonance frequency due to the positional relationship between the position-indicating device and the tablet, the influence of a surrounding metal substance, and so on. In addition, there is another disadvantage of a limited amount of detectable information.

Therefore, in such position-indicating device, power supply may be extracted from a resonance signal in a resonance circuit and the extracted power supply may be then used to drive various circuits in the position-indicating device. See, for example, Japanese Unexamined Patent Application Publication No. 7-175572 (JP 7-175572 A) (also published as US5679930) and Japanese Unexamined Patent Application Publication No. 7-200137 (JP 7-200137 A) (also published as US5600105).

In other words, in the invention disclosed in JP 7-175572 A, the position-indicating device includes a power supply extraction circuit; a circuit for detecting and converting continuous information, such as pen pressure; an information reply circuit; and so on, in addition to a resonance circuit. Thus, continuous information, such as pen pressure, can be detected in the position-detecting apparatus with an extremely high precision, while being allowed to detect plural pieces of continuous information.

Furthermore, the invention disclosed in JP 7-200137 A provides a position-indicating device including a power supply extraction circuit, an information reply circuit, and so on in addition to a resonance circuit. Further, the position-indicating device is allowed to be controlled by an instruction from a tablet. Therefore, a position-detecting apparatus is obtained in which ID information specific to the position-indicating device can be detected together with pen pressure.

### Summary of the Invention

The present invention provides a position-indicating device for indicating a position on a tablet and a position detecting apparatus as define by the independent claims. Further embodiments of the invention are as described in the dependent claims.

However, in the position-detecting apparatus as described in any of JP 7-175572 A and JP 7-200137 A, the level of a signal generated in the resonance circuit may be absorbed as power supply in the position-indicating device even though a transmission power from the tablet is increased. Therefore, in order to eliminate the influence of noise, such a position-detecting apparatus may require an increase in power consumption because of the need of transmitting a stronger signal from the tablet.

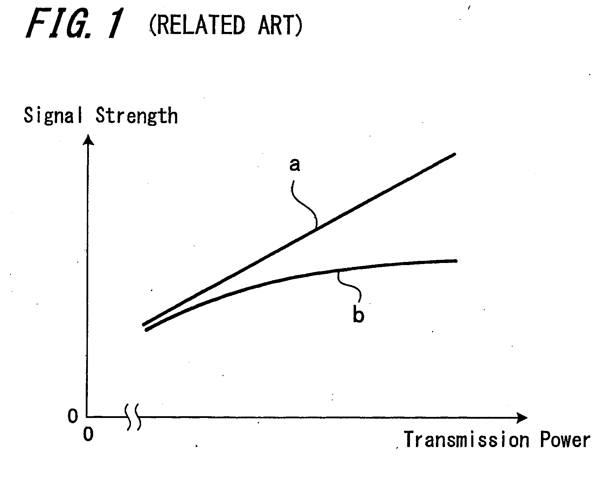

FIG. 1 is a diagram that represents a comparison of changes of signal strengths occurred in the respective resonance circuits upon increases of transmission power from the tablets in the position-detecting apparatuses described in JP 63-70326 A, JP 7-175572 A, and JP 7-200137 A. In FIG. 1, graphic line "a" represents the characteristics of the circuit described in JP 63-70326 A and graphic line "b" represents the characteristics of the circuit described in JP 7-175572 A or JP 7-200137 A.

In the circuit of JP 63-70326 A, the signal strength increases as the transmission power increases. However, in the circuit of JP 7-175572 A or JP 7-200137 A, the rate of increase gradually decreases as the transmission power increases even though the signal strength of the resonance circuit increases. The reason for such behavior can be explained as follows. The circuit described in JP 63-70326 A is provided with the resonance circuit alone and the circuit of JP 7-175572 A or JP 7-200137 A is further provided with a circuit for extracting power supply, thereby allowing the power supply to drive various control circuits and so on.

In other words, in the circuits of JP 7-175572 A and JP 7-200137 A, a control unit is mainly configured with CMOS circuits, respectively. A power supply current, which is consumed by the CMOS circuit, increases in proportion to an increase in power supply voltage. Thus, an increase in transmission power from the tablet leads to an increase in power supply voltage extracted in the position-indicating device. In this case, however, the power supply current also increases. Thus, an increase in voltage stored in a power supply capacitor is thus suppressed. Similarly, as a result, an increase in signal voltage of the resonance is small.

It is desirable to provide a position-detecting apparatus and a position-indicating device, each of which is capable of correctly detecting a coordinate position without receiving an influence of external noise even with a small transmission power and precisely detecting continuous information, such as pen pressure, together with the detection of ID information specific to the position-indicating device and other information.

According to an embodiment of the present invention, there is provided a position-detecting apparatus including a tablet for transmitting an electromagnetic wave and a position-indicating device for generating a transmission signal by receiving the electromagnetic wave from the tablet. The position-indicating device indicates a position on the tablet to be detected by the position-detecting apparatus.

The position-indicating device includes: a resonance circuit having a coil and a capacitor; a power supply extraction unit, which extracts power supply from an induction voltage to be introduced into the coil; an information reply unit, which transmits information as a reply from the position-indicating device to the tablet; and a voltage conversion unit, which generates a second power supply having a predetermined voltage level lower than a first power supply extracted by the power supply extraction unit.

The power supply extraction unit includes at least a rectifying device and a charging capacitor.

The charging capacitor is charged when a voltage generated to the resonance circuit is higher than a voltage corresponding to a voltage retained in the charging capacitor.

The information reply unit transmits the information as a reply from the position-indicating device by controlling the resonance circuit based on a control signal generated by a transistor circuit operated by the second power supply.

In the position-detecting apparatus according to the above embodiment, the position-indicating device further includes an operation information detecting unit having a transistor circuit for detecting at least pen pressure and/or switch operation. In addition, the operation information detecting unit may be operated by the second power supply.

According to another embodiment of the present invention, there is provided a position-indicating device for indicating a position on a tablet by generating a transmission signal to the tablet upon receiving an electromagnetic wave transmitted from the tablet. The position-indicating device includes: a resonance circuit having a coil and a power supply extraction unit, which extracts power supply from an induction voltage to be introduced into the coil; an information reply unit, which transmits predetermined information as a reply to the tablet and a voltage conversion unit, which generates a second power supply having a predetermined voltage level lower than a first power supply extracted from power supply extraction unit.

The power supply extraction unit includes at least a rectifying device and a charging capacitor.

The charging capacitor is charged when a voltage generated to the resonance circuit is higher than a voltage corresponding to a voltage retained in the charging capacitor.

The information reply unit transmits the information as a reply from the position-indicating device by controlling the resonance circuit based on a control signal generated by a transistor circuit operated by the second power supply.

The position-indicating device according to the above described embodiment further includes: an operation information detecting unit, which includes a transistor circuit for detecting at least pen pressure and/or switch operation. The operation information detecting unit may be operated by the second power supply.

According to the embodiments of the present invention, each of the position-detecting apparatus and the position-indicating device includes the power supply extraction unit for extracting power supply from a voltage generated in the resonance circuit of the position-indicating device. In addition, each of the apparatus and device also includes the voltage conversion unit for converting the extracted power supply into a predetermined lower voltage. Thus, the circuit is driven by power supply at the converted predetermined voltage, so that an electric power consumed in the position-indicating device can be kept at constant, regardless of the level of transmission power from the tablet. Consequently, the electric power consumed in the position-indicating device is minimized by maintaining the circuit-driving voltage at a value as low as possible.

Therefore, even if the transmission power from the tablet has less strength, a strong signal may be detected from the position-indicating device. In addition, even in the case of combining the position-detecting apparatus with a liquid crystal panel or the like, there may be no need to increase the transmission power as much as that of the typical apparatus. Thus, the coordinate position can be stably detected. Furthermore, in the case of detecting the continuous information, such as pen pressure, there may be no influence on the positional relationships between the tablet and the position-indicating device, the surrounding metal substance, and so on. Furthermore, a position-detecting apparatus and a position-indicating device, which are capable of detecting ID information specific to the position-indicating device and other information, can be obtained.

### Brief Description of the Drawings

FIG. 1 is a graphic diagram for explaining a position-detecting apparatus and a position-indicating device according to related art.
FIG. 2 is a block diagram illustrating a position-indicating device according to an embodiment of the present invention.
FIG. 3 is a schematic perspective diagram illustrating a configuration of the position-indicating device shown in FIG. 2.
FIG. 4 is a schematic circuit diagram illustrating a tablet employed in a position-detecting apparatus according to an embodiment of the present invention.
FIG. 5 is a schematic circuit diagram illustrating a position-detecting apparatus and a position-indicating device according to an embodiment of the present invention.
FIG. 6 is a time chart for illustrating operations of a position-detecting apparatus and a position-indicating device according to an embodiment of the present invention.
FIG. 7 is a time chart for illustrating operations of a position-detecting apparatus and a position-indicating device according to an embodiment of the present invention.
FIG. 8 is a graphic diagram illustrating characteristics of a position-detecting apparatus and a position-indicating device according to an embodiment of the present invention.
FIG. 9 is a graphic diagram illustrating characteristics of a position-detecting apparatus and a position-indicating device according to an embodiment of the present invention.

### Description of the Preferred Embodiments

Hereinafter, embodiments of the position-detecting apparatus and the position-indicating device according to the present invention will be described with reference to the attached drawings.

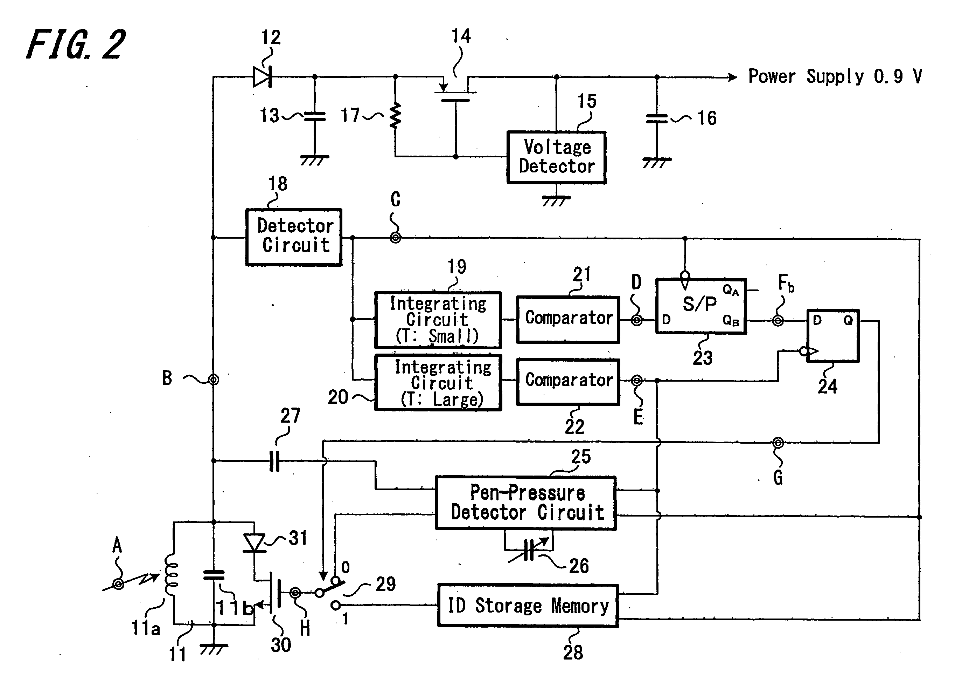

First, FIG. 2 is a block diagram that illustrates an exemplified configuration of a position-indicating device, which is the main part of a position-detecting apparatus, as an embodiment of the present invention.

As shown in FIG. 2, the position-indicating device includes: a resonance circuit 11, a diode 12, a capacitor 13, a P-channel MOSFET 14, a voltage detector 15, a capacitor 16, and a resistor 17. The resonance circuit 11 having a predetermined resonance frequency f0 includes a coil 11 a and a capacitor 11 b. The diode 12 and capacitor 13 constitute a power supply extraction unit. The P-channel MOSFET 14, voltage detector 15, capacitor 16, and a resistor 17 constitute a voltage conversion unit. A voltage stored in the capacitor 16 is supplied as power supply to each circuit described below.

The position-indicating device further includes: a detector circuit 18, an integrating circuit 19 and an integrating circuit 20, a comparator 21 and a comparator 22, a serial/parallel converter 23, and a D flip-flop 24. The detector circuit 18 generates a clock corresponding to a period of transmission from a later-described tablet to transmission interruption. The integrating circuit 19 and integrating circuit 20 have different time constants, respectively. Here, the time constant of the integrating circuit 20 is set to be larger than that of the integrating circuit 19. The comparator 21 makes a comparison between an output signal from the integrating circuit 19 and a threshold voltage, here 50% of a power supply voltage, to convert such a signal into an output digital signal.

Similarly, the comparator 22 makes a comparison between an output signal from the integrating circuit 20 and a threshold voltage, here 50% of a power supply voltage, to convert such a signal into an output digital signal. Here, according to this embodiment, the time constant of the integrating circuit 19 and the time constant of the integrating circuit 20 are respectively determined as follows. That is, the output of the comparator 21 starts up when the duration of transmission exceeds about 100 µs, while the output of the comparator 22 starts up when the duration of transmission exceeds about 300 µs.

The serial/parallel converter 23 includes a 2-bit shift resister. The serial/parallel converter 23 receives an output value from the comparator 21 every falling of a clock from the detector circuit 18. Further, the D flip-flop 24 retains and outputs a value from a second-bit output QB of the serial/parallel converter 23 upon falling of the output of the comparator 22.

Furthermore, the position-indicating device includes: a pen-pressure detector circuit 25, a variable capacitor 26, a capacitor 27, an ID storage memory 28, a switch 29, and an N-channel MOSFET 30. The pen-pressure detector circuit 25 converts pen pressure applied on the variable capacitor 26, in which the capacitance thereof varies depending on the pen pressure, into a digital value and sequentially outputs the results in response to clocks from the detector circuit 18. The pen-pressure detector circuit 25 digitizes a charging time or a discharging time at a time-constant circuit formed of the variable capacitor 26 by counting signals of frequency f0 inputted through a capacitor 27. It should be noted that the principle of operation of detecting the pen pressure is described in JP 7-175572 A in detail, so that the description thereof will be herein omitted.

The ID storage memory 28 stores ID information (here, information of 40 bits) specific to the position-indicating device. ID information is sequential output in response to clocks from the detector circuit 18. The switch 29 selects one of the pen-pressure detector circuit 25 and the ID storage memory 28 depending on an output value from the D flip-flop 24, followed by supplying such an output to the gate terminal of the N-channel MOSFET 30.

The MOSFET 30 is connected to both ends of the resonance circuit 11 through a diode 31. The diode 31 is provided for preventing a signal of the resonance circuit 11 from leaking by a parasitic diode that exists between a drain and a source of the MOSFET 30. Thus, a position-indicating device according to an embodiment of the present invention can be formed. Note that respective circuits in FIG. 2 may be configured with a known CMOS circuit.

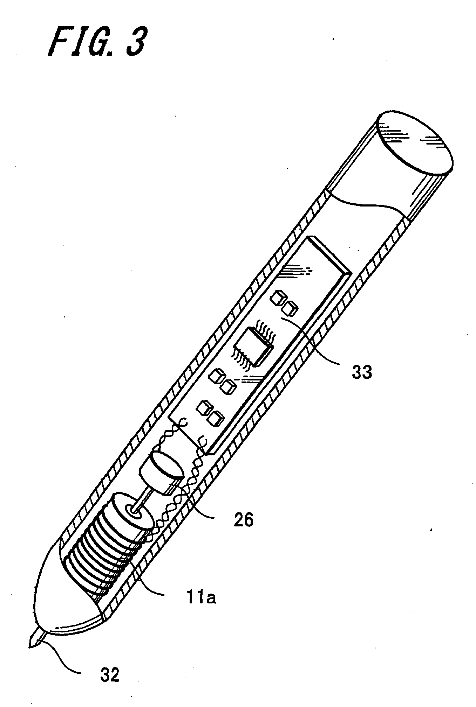

FIG. 3 illustrates the structure of the position-indicating device shown in FIG. 2. In FIG. 3, the same reference numerals are given to the components corresponding to those in FIG. 2. Here, the coil 11 a is a coil wound around a cylindrical ferrite material. A pen-pressure detecting member 26 corresponds to the variable capacitor (capacitor 26 shown in FIG. 2) in which the capacitance thereof can vary with pen pressure. The pressure applied on a pen tip 32 is transmitted to the variable capacitor 26 through a hollow part of the coil 11 a. In addition, each of the circuit components shown in FIG. 2 is mounted on a circuit board 33.

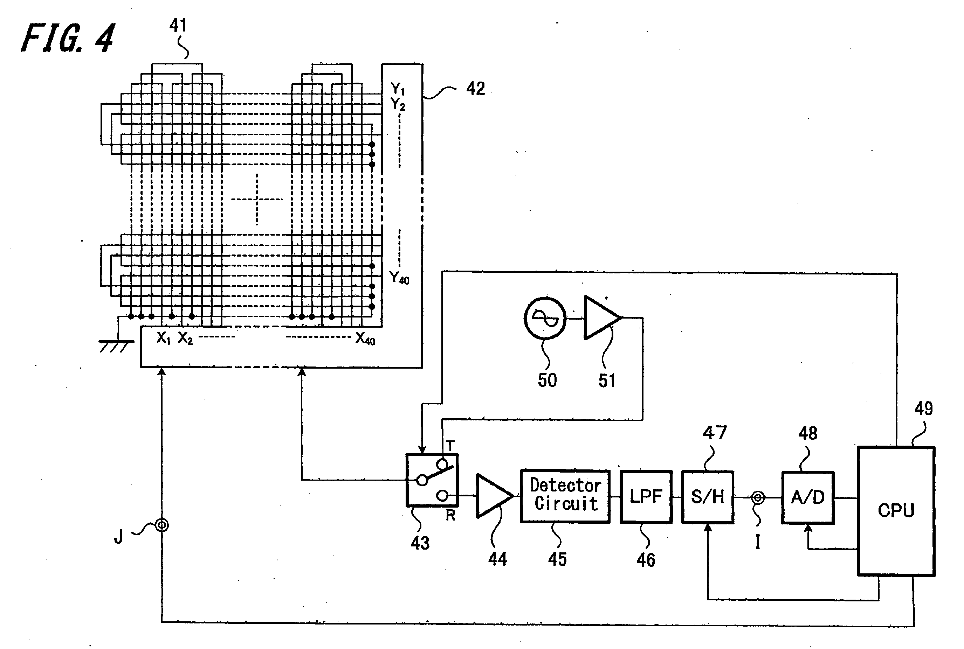

In contrast, FIG. 4 illustrates the configuration of a tablet of the position-detecting apparatus according to an embodiment of the present invention. However, the tablet has the same configuration as that of one disclosed in any of JP 63-70326 A, JP 7-175572 A, and JP 7-200137 A. As shown in FIG. 4, 40 loop coils X1 to X40 in the X-axis direction and 40 loop coils Y1 to Y40 in the Y-axis direction are arranged at a position-detecting unit 41. These loop coils are connected to a selection circuit 42 configured to select the respective loop coils.

The selection circuit 42 is connected to a transmit/receive switching circuit 43. A receiving side of the transmit/receive switching circuit 43 is connected to an amplifier 44. The amplifier 44 is connected to a detector circuit 45. The detector circuit 45 is connected to a low-pass filter 46. The low-pass filter 46 is connected to a sample-and-hold circuit 47. The sample-and-hold circuit 47 is connected to an A/D converting circuit 48. Subsequently, the A/D converting circuit 48 is connected to a central processor unit (CPU) 49.

Control signals from the CPU 49 are supplied to the selection circuit 42, the sample-and-hold circuit 47, the A/D converting circuit 48, and the transmit/receive switching circuit 43, respectively. In addition, the position-detecting apparatus according to the embodiment further includes an oscillator 50 that generates an alternating-current (AC) signal with a frequency of f0 and a current driver 51 that converts the AC signal into a current. Thus, upon receiving a control signal from the CPU 49, the transmit/receive switching circuit 43 is switched to transmit an AC signal with a frequency of f0 from the position-detecting unit 41.

Operations of the above embodiments will be described below. Note that, similar to the case with the invention disclosed in any of JP 63-70326 A, JP 7-175572 A, and JP 7-200137 A, the tablet in the embodiments receives a signal remained in the resonance circuit 11 of the position-indicating device after transmitting the signal for a predetermined time period to calculate the coordinate value of an indicated position. The coordinate detection operation is carried out in a manner similar to that of the apparatus of the related art, so that the description thereof will be omitted.

First, the operation of the power supply circuit portion of the position-indicating device will be described. In the circuit shown in FIG. 2, the capacitor 16 retains a voltage almost equal to a voltage detected by the voltage detector 15 and then supplied as a power supply for each processing circuit as described later. In this embodiment, the voltage is set to 0.9 V. Here, the voltage detector 15 is in the form of an open-drain output. The output terminal of the voltage detector 15 is in a Hi-impedance state when an input voltage (the voltage of the capacitor 16) is 0.9 V or more. In contrast, a Lo level (0 V) is output when the voltage is less than 0.9 V.

If the voltage of the capacitor 16 decreases slightly less than 0.9 V, the voltage detector 15 outputs the Lo-level. Thus, the MOSFET 14 is turned on. The capacitor 13 retains a voltage higher than 0.9 V, so that the capacitor 16 can be charged through the MOSFET 14. When the voltage of the capacitor 16 reaches 0.9 V or more, output of the voltage detector 15 immediately turns to a Hi-impedance state. Thus, the MOSFET 14 is turned off, thereby completing the charging of the capacitor 16. Consequently, a voltage of the capacitor 16 is retained to almost 0.9 V.

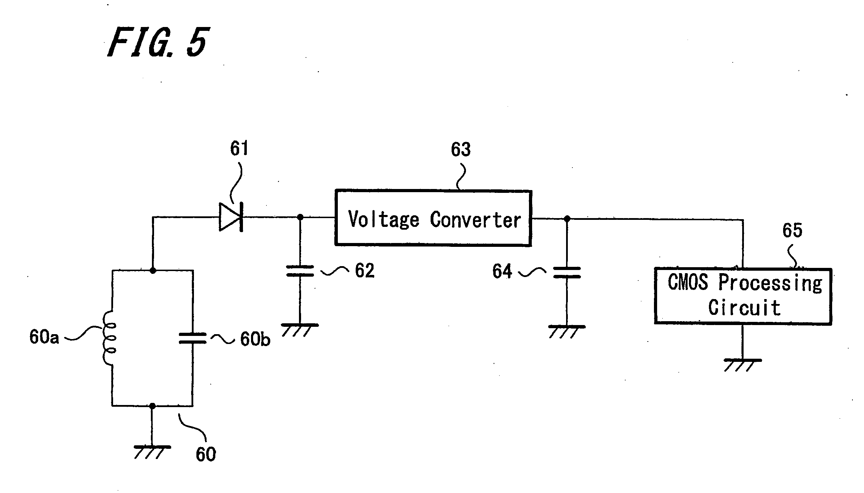

The configuration of the embodiment as described above is one of characteristic features of the present invention. Such a characteristic feature will be further described below. FIG. 5 illustrates a basic configuration of a position-indicating device for describing an embodiment of the present invention. As shown in FIG. 5, a resonance circuit 60 includes a coil 60a and a capacitor 60b. A diode 61 and a capacitor 62 constitute a power supply extraction unit. A voltage converter 63 and a capacitor 64 constitute a voltage conversion unit.

Furthermore, a CMOS processing circuit 65 outputs a control signal for controlling the resonance circuit 60 at a predetermined timing in response to, for example, the detection of information about pen pressure or operation of a switch or the like, in accordance with information about the operation, ID information specific to the position-indicating device. Such processing circuit 65 is configured in a manner similar to one disclosed in any of JP 7-175572 A and JP 7-200137 A.

In the above-described circuit, furthermore, a voltage output from the voltage converter 63 is supplied as the lowest voltage for allowing the processing circuit 65 to be driven. Thus, the electric power consumed by the processing circuit 65 is at the lowest level irrelevant to a signal strength generated in the resonance circuit 60. Therefore, in this circuit, an increase in transmission power from the tablet proportionally leads to an increase in voltage extracted in the capacitor 62. Thus, signal voltage generated in the resonance circuit 60 is also increased. Accordingly, as described in FIG. 1 in the section of the related art, variation character (graphic line "a"), which is proximate to the circuit of JP 63-70326 A, can be obtained.

As described above, according to the embodiments of the position-detecting apparatus and the position-indicating device of the present invention, a voltage for driving circuits may be as small as possible to make an electric power consumed in the position-indicating device the lowest level. Therefore, even if the transmission power from the tablet is less strong, a strong signal may be detected from the position-indicating device. In addition, in the case of combining with a liquid crystal panel or the like, a coordinate position can be stably detected. Furthermore, the continuous information such as pen pressure can be detected without an influence of the positional relationship between the tablet and the position-indicating device, the surrounding metal substance, and so on.

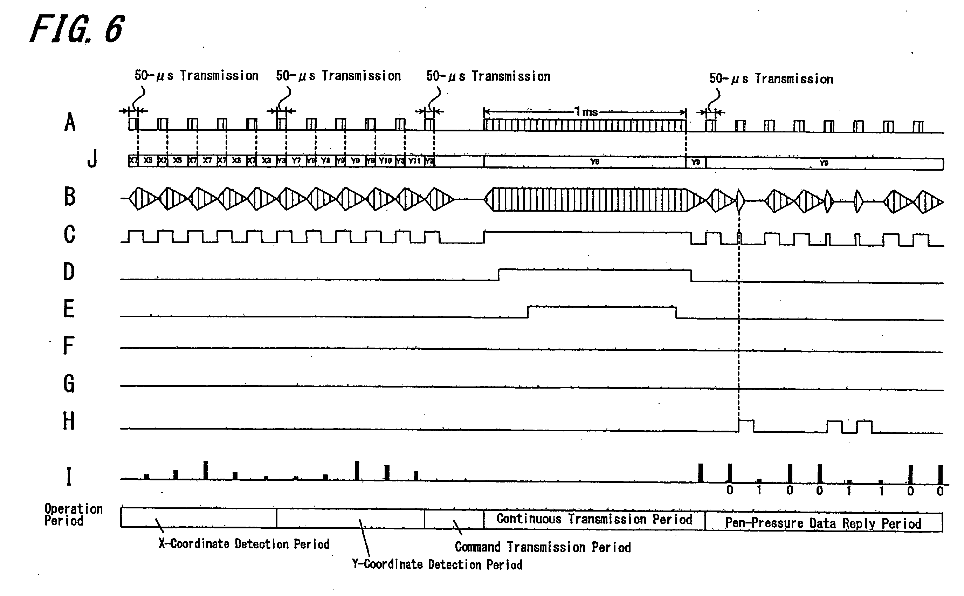

Furthermore, according to the embodiment, the tablet transmits a control signal to the position-indicating device. Subsequently, the position-indicating device selects one of pen-pressure information and ID information specific to the position-indicating device and then sends a reply to the tablet. FIG. 6 illustrates an operation carried out upon a request of pen-pressure information from the tablet to the position-indicating device. In FIG. 6, symbols A to J represent operation waveforms of portions indicated by the same symbols as those in FIGS. 2 and 3, respectively.

Specifically, symbol A denotes a tablet transmission signal, symbol B denotes voltages at both ends of the resonance circuit 11, symbol C denotes output from the detector circuit 18, symbol D denotes output from the comparator 21, symbol E denotes output from the comparator 22, symbol Fa denotes output from the serial/parallel converter Qa, symbol Fb denotes output from the serial/parallel converter Qb, symbol G denotes a control signal for the switch 29, symbol H denotes a control signal for the MOSFET 30, symbol I denotes a tablet A/D input signal, and symbol J denotes the tablet-coil selection number. Hereinafter, the operation will be described in which the position-indicating device may be on the intersection between the loop coil X7 and the loop coil Y9 on the position-detecting unit 41 of the tablet.

The CPU 49 of the tablet carries out alternating operations of transmission and reception five times to obtain the X coordinate of the indicating position of the position-indicating device. In this case, the loop coil X7 proximate to the position-indicating device is selected when carrying out the transmission, while the loop coils X5 to X9 are sequentially switched when carrying out the reception. The CPU 49 obtains signal levels detected from five loop coils with a center on the loop coil X7 based on these five transmission/reception operations.

As represented by the symbol I in FIG. 6, among these signal levels, the highest signal level is obtained when selecting the loop coil X7 and receiving the signal thereof. The signal levels are distributed to be lowered with distance from the loop coil X7. The CPU 49 calculates an X-coordinate value indicated by the position-indicating device in a manner similar to that of the device of the related art, while referring to such a signal level distribution.

Subsequently, the CPU 49 carries out alternating operations of transmission and reception five times to obtain the Y coordinate of the indicating position of the position-indicating device. In this case, the loop coil Y9 proximate to the position-indicating device is selected when carrying out the transmission, while the loop coils Y7 to Y11 are sequentially switched when carrying out the reception. The CPU 49 obtains the Y coordinate value in a manner similar to one carrying out when detecting the X-coordinate value.

Furthermore, in the operations for detecting the X coordinate and the Y coordinate, when the peak of the signal levels from the respective five loop coils has deviated from the central number, it is determined that the position-indicating device is moved and the loop coil number, at which the peek level is obtained, is updated to the number proximate to the position-indicating device.

Subsequently, the CPU 49 selects the renewed loop coil number proximate to the position-indicating device in the operation of detecting the Y coordinate so that a command signal that requests pen-pressure information may be transmitted from the position-indicating device. Here, the loop coil Y9 is selected and the transmission with a time-duration of 50 µs is then carried out. This transmission time is sufficiently shorter than the time constant of the integrating circuit 19. Thus, there is no change of storing "1" in the serial/parallel converter 23 and the output of the D flip-flop 24 retains "0". Thus, the switch 29 is in a state of selecting the output side of the pen-pressure detector circuit 25 during the period of data reply as described later.

Subsequently, s continuous transmission with a time-duration of about 1 ms is carried out in a state of selecting the loop coil Y9. The continuous transmission intends to define a command transmitted immediately before the continuous transmission and also intends to determine a timing of starting the data reply as described later. In addition, the operations of detecting pen pressure and converting it into a digital value are carried out during such a continuous transmission period. Upon completing the transmission with a time-duration of 1 ms, then the CPU 49 carries out the reception operation in a state of selecting the loop coil Y9. The CPU 49 stores a value half the signal level detected at this time as a reference level for the data detection as described later.

Subsequently, the CPU 49 alternately carries out a transmission at a time-duration of 50 µs and a reception at a time-duration of 100 µs, eight times in total. The eight cycles of transmission/reception detect 8-bit pen-pressure data sequentially transmitted from the pen-pressure detector circuit 25. In other words, the data is stored as "0" when the level detected by the transmission/reception is higher than the previously stored reference level, while the data is stored as "1" when the level is lower than the reference level. Such eight transmission/reception operations allow the CPU 49 to detect pen pressure added to the variable capacitor 26 to be detected as a digital value of 8 bits.

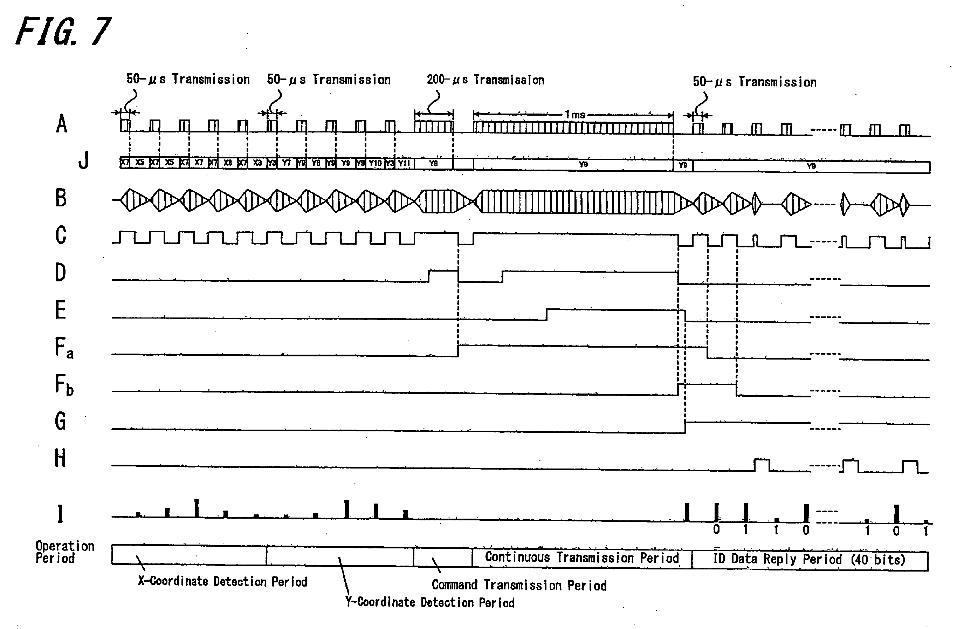

FIG. 7 illustrates the operation of the tablet when the tablet requests the reply of the specific ID information to the position-indicating device. FIG. 7 illustrates the same operation as that of FIG. 6, only except that the time-duration of command transmission is 200 µS and the number of transmission/reception repetitions when carrying out data reception is forty times.

After about 100 µs from the initiation of command transmission, the output of the comparator 21 changes to a Hi level. After completing the transmission, the output of the detector circuit 18 falls and then the serial/parallel converter 23 uptakes "1", the output of the comparator 21 to make the output Q_{A} at the fist bit "1". After additional 1-ms continuous transmission, the output of the detection circuit 18 falls to shift the Q_{A}-output value of the serial/parallel converter 23 to Q_{B} at the second bit.

Therefore, the Q_{B} terminal of the serial/parallel converter gives a Hi level as an output. The output of the comparator 22 rises up when about 300 µs is passed from the initiation of the 1-ms continuous transmission. After a while of completing the continuous transmission, the output of the comparator 22 falls as indicated by the symbol E in FIG. 7. The falling edge allows the D flip-flop 24 to define a control signal to the switch 29 as "1".

These operations allow the switch 29 to be switched to select the ID storage memory 28. 40-bit unique ID information is written in the ID storage memory 28, thereby allowing sequential outputs of "0" or "1" in synchronization with clocks output from the detector circuit 18.

The above described operations in which pen pressure and unique ID are selected and replied have no substantial difference compared with those of the device of the related art. However, the device according to the present embodiment can detect a strong signal even with less transmission power, because of the reason described below.

The CMOS circuits used in the position-indicating device shown in FIG. 3 is currently known as a semiconductor technology with the lowest power consumption. A power supply voltage for the operation of the CMOS circuit is about 0.9 V, which is practically used as the lowest voltage. In addition, the level of current consumed by the CMOS current is known to increase in proportion to the power supply voltage. According to the embodiment of the present invention, therefore, a power supply extracted in the position-indicating device can be supplied to the CMOS circuits after being converted into 0.9 V.

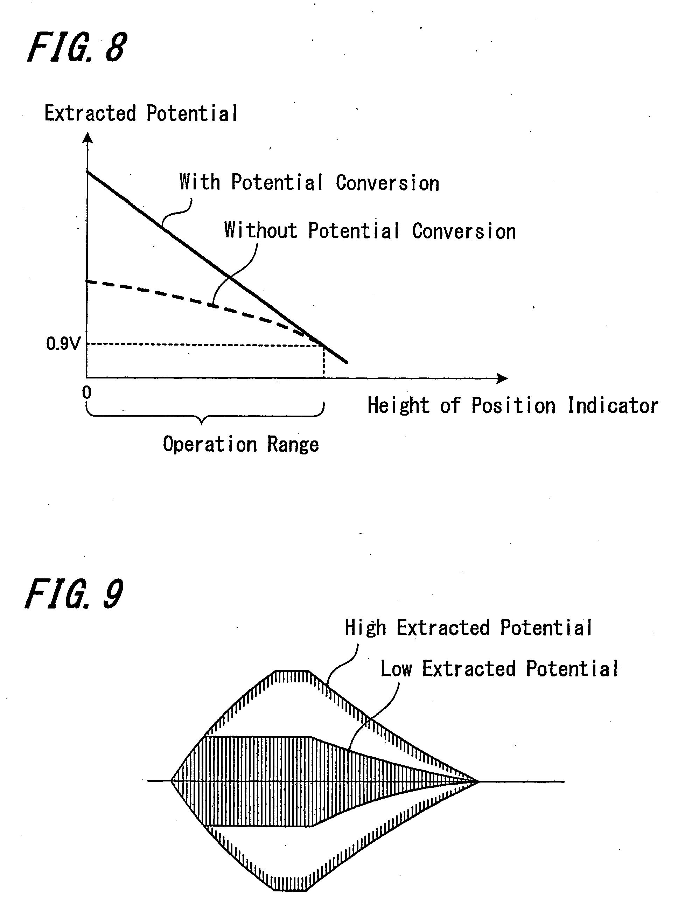

Here, FIG. 8 illustrates the relationship between the height from the tablet surface to the position-indicating device and the voltage extracted by the capacitor 13 in the embodiment described above. In FIG. 8, the dotted line corresponds to a typical case in which the voltage conversion to 0.9 V is not carried out and a voltage generated in the capacitor 13 is used as a power supply without modification. Further, FIG. 9 represents that a signal level generated at both ends of the resonance circuit 11 at a high voltage is different from a signal level at a low voltage.

As shown in FIG. 9, the signal level of the resonance circuit 11 may increase at a predetermined rate when the signal transmission from the tablet is initiated. Upon reaching to the voltage retained in the capacitor 13, a signal generated from the resonance circuit 11 is absorbed into the capacitor 13 through the diode 12. Accordingly, even if successive transmission continues, voltages at both ends of the resonance circuit may not increase, thereby causing a saturated state as shown in FIG. 9. The saturated voltage corresponds to the voltage of the capacitor 13.

Here, the apparatus according to the embodiments of the present invention keeps almost a constant power consumed in the position-indicating device regardless of an increase of the transmission power from the tablet. Thus, the voltage extracted in the capacitor 13 can be enhanced in response to the signal level of transmission from the tablet. In addition, the saturated voltage corresponding to the voltage of the capacitor 13 can also be enhanced sufficiently. Therefore, the apparatus according to the embodiment of the present invention can generate a strong signal in the resonance circuit of the position-indicating device even a less transmission power from the tablet, compared with the apparatus of the related art, while the tablet can detect the strong signal.

In other words, according to the embodiments of the present invention, the resonance circuit is provided with a circuit for extracting a power supply having a constant voltage. Thus, the voltage of the resonance circuit can be sufficiently increased and a strong transmission signal can be generated. In contrast, the typical apparatus supplies an extracted power supply without any modification to the CMOS circuit. Thus, the more the transmission power from the tablet increases, the more the electric power is consumed in the position-indicating device. As a result, an increase in signal strength for replying from the position-indicating device to the tablet may not increase sufficiently.
Furthermore, other embodiments will be described as follows.

That is, in the above-described embodiment, the voltage conversion unit includes the voltage detector and the MOSFET, but not limited thereto. In addition, the power supply extraction unit includes the capacitor together with one diode. Alternatively, it may employ two diodes or any of other rectifying devices.

In addition, in the above-described embodiment, the exemplified apparatus makes a reply by switching pen-pressure data and unique-ID data in response to a command from the tablet. Alternatively, the command may not be transmitted or any information about a switch or the like may be replied. Alternatively, the command from the tablet may be of a plurality of bits and may be replied after the selection of information from various kinds of information.

In addition, in the above-described embodiment, the pen pressure to be detected is represented by 8 bits. Alternatively, it may be represented by a larger number of bits. For example, as shown in FIG. 3, a switch may be mounted on the side of the position-indicating device to make a reply by transmission of information about the switch operation subsequent to the pen-pressure data.

In addition, in the above-described embodiment, the data is replied by a short circuit in the resonance circuit. Alternatively, the data may be replied by slightly changing the resonance frequency or controlling any of other characteristics of the resonance circuit. In addition, the replying data is not necessarily in a digital form. The reply may be carried out by any method, such as one for continuously changing the frequencies or amplitudes of signals generated in the resonance circuit.

Furthermore, in the above-described embodiment, the coil for transmission from the tablet is in common with the receiving coil. Alternatively, a coil for the exclusive use in transmission may be mounted.

The present invention is not limited to any of the embodiments described above. Various modifications and alterations within the scope of the claims will become apparent to those skilled in the art.

## Claims

1. A position-indicating device for indicating a position on a tablet by transmitting a transmission signal to the tablet upon receiving an electromagnetic wave transmitted from the tablet, the position-indicating device comprising:
- a resonance circuit (11; 60);
- power supply extraction means for extracting a first power supply from an induction voltage to be induced across the resonant circuit, the power supply extraction means comprising a rectifying device (12; 61) and a charging capacitor (13; 63), the charging capacitor being charged when the induction voltage is greater than a first supply voltage across the charging capacitor; and
- a transistor circuit (65);
**characterized by**
- voltage conversion means (14,15; 63) for generating a second power supply having a voltage level lower than the first supply voltage,
wherein the transistor circuit (65) is operated by the second power supply.

2. The position-indicating device of claim 1, further comprising information reply means for transmitting information as a reply to the tablet based on a control signal generated by the transistor circuit (65).

3. The position-indicating device of claims 1 or 2, wherein the information reply means transmits the information by controlling the resonant circuit (11; 60).

4. The position-indicating device of any one of claims 1 to 3, further comprising operation information detection (25, 26) means for detecting a user manipulation of the position-indicating device, and the information being an indication of the user manipulation .

5. The position-indicating device of claim 4, the user manipulation being a pen pressure.

6. The position-indicating device of claim 4, the user manipulation being the operation of a switch (29).

7. The position-indicating device of any one of claims 1 to 6, the voltage conversion means (14, 15) comprising a voltage detector (15) and a field effect transistor (14).

8. The position-indicating device of any one of claims 1 to 7, further comprising a memory (28) for storing an identifier, the information comprising the identifier.

9. A position detecting apparatus comprising:
- a position-indicating device according to any one of the preceding claims 1 to 8; and
- a tablet.

## Patentansprüche

1. Positionsangabevorrichtung zum Angeben einer Position auf einem Tablett durch Senden eines Sendesignals zu dem Tablett bei Empfang einer von dem Tablett gesendeten elektromagnetischen Welle, wobei die Positionsangabevorrichtung enthält:
- eine Resonanzschaltung (11; 60);
- Stromversorgungs-Entnahmemittel zum Entnehmen einer ersten Stromversorgung aus einer Induktionsspannung, die über die Resonanzschaltung induziert werden soll, wobei die Stromversorgungs-Entnahmemittel eine Gleichrichtervorrichtung (12; 61) und einen Ladekondensator (13; 63) enthalten, wobei der Ladekondensator geladen wird, wenn die Induktionsspannung größer als eine erste Versorgungsspannung über dem Ladekondensator ist; und
- eine Transistorschaltung (65);
**gekennzeichnet durch**
- Spannungsumsetzungsmittel (14, 15; 63) zum Erzeugen einer zweiten Stromversorgung, deren Spannungspegel niedriger als jener der ersten Stromversorgung ist,
wobei die Transistorschaltung (65) **durch** die zweite Stromversorgung betrieben wird.

2. Positionsangabevorrichtung nach Anspruch 1, die ferner Informationsbeantwortungsmittel enthält, um anhand eines durch die Transistorschaltung (65) erzeugten Steuersignals Informationen als eine Antwort zu dem Tablett zu senden.

3. Positionsangabevorrichtung nach Anspruch 1 oder 2, wobei die Informationsbeantwortungsmittel die Informationen durch Steuern der Resonanzschaltung (11; 60) senden.

4. Positionsangabevorrichtung nach einem der Ansprüche 1 bis 3, die ferner Betriebsinformations-Erfassungsmittel (25, 26) enthält, um eine Anwendermanipulation der Positionsangabevorrichtung zu erfassen, wobei die Informationen eine Angabe der Anwendermanipulation sind.

5. Positionsangabevorrichtung nach Anspruch 4, wobei die Anwendermanipulation der Druck eines Schreibstifts ist.

6. Positionsangabevorrichtung nach Anspruch 4, wobei die Anwendermanipulation die Betätigung eines Schalters (29) ist.

7. Positionsangabevorrichtung nach einem der Ansprüche 1 bis 6, wobei die Spannungsumsetzungsmittel (14, 15) einen Spannungsdetektor (15) und einen Feldeffekttransistor (14) enthalten.

8. Positionsangabevorrichtung nach einem der Ansprüche 1 bis 7, die ferner einen Speicher (28) zum Speichern eines Identifizierers enthält, wobei die Informationen den Identifizierer enthalten.

9. Positionserfassungsvorrichtung, die enthält:
- eine Positionsangabevorrichtung nach einem der vorhergehenden Ansprüche 1 bis 8; und
- ein Tablett.

## Revendications

1. Dispositif indicateur de position servant à indiquer une position sur une tablette du fait qu'il transmet un signal de transmission à la tablette au moment où il reçoit une onde électromagnétque ayant été transmise depuis la tablette, le dispositif indicateur de position comprenant :
- un circuit de résonance (11 ; 60) ;
- des moyens d'extraction de l'alimentation en énergie pour extraire une première alimentation en énergie à partir d'une tension d'induction destinée à être induite aux bornes d'un circuit résonant, les moyens d'extraction de l'alimentation en énergie comportant un dispositif redresseur (12 ; 61) et un condensateur de charge (13 ; 63), le condensateur de charge étant chargé lorsque la tension d'induction est supérieure à une première alimentation en énergie aux bornes du condensateur de charge ; et
- un circuit à transistor (65) ;
**caractérisé par**
- des moyens de conversion de tension (14, 15 ; 63) pour générer une deuxième alimentation en énergie dont le niveau de tension est inférieur à la première alimentation en énergie,
cas dans lequel le circuit à transistor (65) est déclenché par la deuxième alimentation en énergie.

2. Dispositif indicateur de position selon la revendication 1, comprenant en outre des moyens de réponse d'information pour transmettre, à titre de réponse, des informations à la tablette sur la base d'un signal de commande ayant été généré par le circuit à transistor (65).

3. Dispositif indicateur de position selon les revendications 1 ou 2, les moyens de réponse d'information transmettant les informations grâce au pilotage du circuit résonant (11 ; 60).

4. Dispositif indicateur de position selon l'une quelconque des revendications 1 à 3, comprenant en outre des moyens de détection (25, 26) d'informations concernant le fonctionnement afin de détecter la manipulation faite par un utilisateur du dispositif indicateur de position, et les informations constituant une indication de la manipulation faite par l'utilisateur.

5. Dispositif indicateur de position selon la revendication 4, la manipulation faite par l'utilisateur étant la pression exercée par un crayon.

6. Dispositif indicateur de position selon la revendication 4, la manipulation faite par l'utilisateur étant l'actionnement d'un commutateur (29).

7. Dispositif indicateur de position selon l'une quelconque des revendications 1 à 6, les moyens de conversion de tension (14, 15) comportant un détecteur de tension (15) et un transistor à effet de champ (14).

8. Dispositif indicateur de position selon l'une quelconque des revendications 1 à 7, comprenant en outre une mémoire (28) destinée à stocker un identifiant, les informations englobant l'identifiant.

9. Dispositif indicateur de position comprenant :
- un dispositif indicateur de position selon l'une quelconque des revendications précédentes 1 à 8 ; et
- une tablette.
